## Europäisches Patentamt
## European Patent Office
## Office européen des brevets

(19)

(11) Veröffentlichungsnummer: **0 283 673**
**B1**

(12) **EUROPÄISCHE PATENTSCHRIFT**

(45) Veröffentlichungstag der Patentschrift:
**17.10.90**

(51) Int. Cl.⁵: **F15B 13/00**

(21) Anmeldenummer: **88101282.7**

(22) Anmeldetag: **29.01.88**

(54) **Druckmittel-Steuerventil.**

(30) Priorität: **27.03.87 CH 1189/87**

(43) Veröffentlichungstag der Anmeldung:
**28.09.88 Patentblatt 88/39**

(45) Bekanntmachung des Hinweises auf die Patenterteilung:
**17.10.90 Patentblatt 90/42**

(84) Benannte Vertragsstaaten:
**AT BE CH DE ES FR GB IT LI LU NL SE**

(56) Entgegenhaltungen:
**DE-U- 1 764 478**
**FR-A- 1 462 820**
**FR-A- 2 250 907**
**FR-A- 2 588 935**

(73) Patentinhaber: **GEORG FISCHER AKTIENGESELLSCHAFT, Mühlentalstrasse 105, CH-8201 Schaffhausen(CH)**

(72) Erfinder: **Gogel, Andreas, Im Grüntal 21, CH-8405 Winterthur(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Druckmittel-Steuerventil, wie es im Oberbegriff von Anspruch 1 definiert ist. Durch das DE-U 1 764 478 ist ein Druckmittel-Steuerventil bekanntgeworden, dessen Ventilkörper mittels durchgehenden Schrauben zu einem Ventilblock zusammenspannbar sind. Jeder Ventilkörper weist eine zu den Schraubenlöchern parallele Längsbohrung auf, welche mit quer dazu angeordneten Bohrungen mit Anschlussgewinden für die Druckmittelzufuhr versehen sind. Beim Zusammensetzen als Ventilblock müssen viele von diesen Bohrungen sowie auch die Enden der Längsbohrung wieder verschlossen werden. Der Herstellungs- als auch der Montageaufwand derartiger Druckmittel-Steuerventile ist somit erheblich, wobei auch die vielen Bohrungen im Ventilkörper dessen Baugrösse bestimmen.

Aufgabe der vorliegenden Erfindung ist die Schaffung eines Druckmittel-Steuerventils der eingangs genannten Art, deren Ventilkörper bei kleinen Abmessungen als Einzelventil als auch als Batterieventil verwendar ist, wobei dies mit möglichst wenig Bohrungen im Ventilkörper und Verbindungsmitteln möglich sein soll.

Erfindungsgemäss wird diese Aufgabe durch die kennzeichnenden Merkmale von Anspruch 1 gelöst.

Besonders vorteilhafte Ausgestaltungen der Erfindung sind in den abhängigen Ansprüchen gekennzeichnet.

Die Erfindung ist in den beiliegenden Zeichnungen beispielsweise dargestellt und nachfolgend beschrieben.

Es zeigen:

Fig. 1 zwei aneinandergesetzte Druckmittel-Steuerventile als Ventil-Batterie im Längsschnitt.
Fig. 2 eine Seitenansicht in Richtung B von Fig. 1
Fig. 3 ein Druckmittel-Steuerventil, welches direkt mit einem Verbraucher verbunden ist und
Fig. 4 eine Draufsicht in Richtung A auf den Ventilkörper von Fig. 3 ohne den Steuer-Teil.

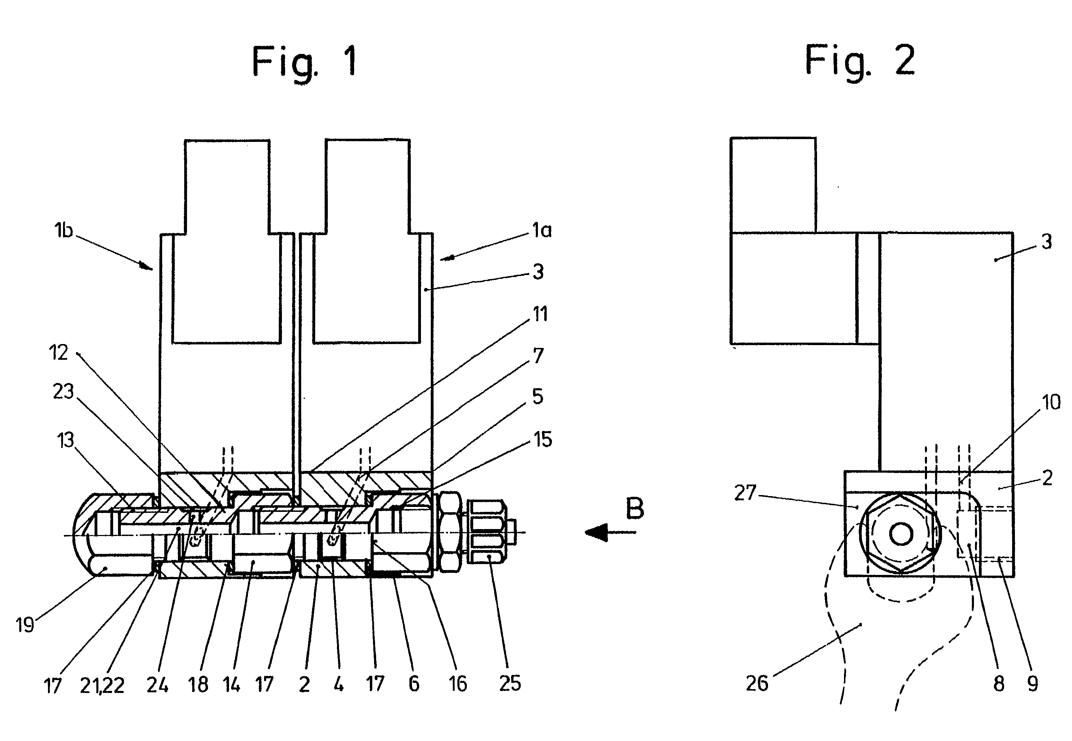

Die in Fig. 1 und 2 gezeigte Ventil-Batterie ist aus zwei gleichen Druckmittel-Steuerventilen 1a, 1b zusammengesetzt. Jedes Druckmittel-Steuerventil 1 weist einen Ventilkörper 2 und einen Steuer-Teil 3, welcher im Ausführungsbeispiel als elektrisch steuerbares Magnetventil ausgebildet ist, auf. Jeder Ventilkörper 2 weist eine Durchgangsbohrung 4 sowie eine an einer Stirnseite 5 des Ventilkörpers 2 angeordnete Ausnehmung 6 auf. Von der Durchgangsbohrung 4 führt eine Verbindungsbohrung 7 zu der Befestigungsfläche 11, an welcher der Steuer-Teil 3 mittels Schrauben befestigt wird. Rechtwinklig zu der Durchgangsbohrung 4 ist eine Bohrung 8 mit einem Anschlussgewinde 9 angeordnet, von welcher eine weitere Verbindungsbohrung 10 zu der Befestigungsfläche 11 führt. Beide Verbindungsbohrungen 7, 10 korrespondieren mit entsprechenden Anschlussbohrungen im Steuer-Teil 3. In jeder Durchgangsbohrung 4 der Ventilkörper 2 ist eine Schraube 12 angeordnet, welche an einem Ende ein Aussengewinde 13 und an ihrem anderen Ende einen Schraubenkopf 14 mit einem Innengewinde 15 aufweist. Durch Einschrauben des Aussengewindes 13 einer Schraube 12 in das Innengewinde 15 der nächsten Schraube 12 werden die Ventilkörper 2 miteinander verbunden, wobei eine Bundfläche 16 des Schraubenkopfes 14 mit einer dazwischen eingelegten Dichtung 17 gegen eine Stirnfläche 18 der Ausnehmung 6 spannbar ist. Die zweite bzw. letzte Schraube 12 wird durch Aufschrauben einer Hutmutter 19 mit einer Dichtung 17 auf das Aussengewinde 13 im letzten bzw. zweiten Ventilkörper 2 fest eingespannt. Die Schrauben 12 weisen eine Durchgangsbohrung 21 auf, wodurch ein durchgehender Kanal 22 vom ersten Steuerventil 1a bis zum letzten Steuerventil 1b gebildet wird.

Die Schraube 12 weist am Aussenumfang eine Ringnute 23 auf, welche durch mindestens eine radiale Bohrung 24 mit der Durchgangsbohrung 21 verbunden ist, wodurch eine Verbindung zwischen dem Kanal 22 und dem Steuer-Teil 3 durch die radiale Bohrung 24 und die Verbindungsbohrung 7 entsteht.

In das Innengewinde 15 der ersten Schraube 12 ist eine Rohrverschraubung 25 eingeschraubt, mittels welcher eine Zufuhrleitung für das Druckmittel anschliessbar ist. Das durch den Kanal 22 und die Bohrungen 24 und 7 jedem Steuerventil 1a, 1b zugeführte Druckmedium wird dann bei geöffneter Ventilstellung durch die Verbindungsbohrung 10 und eine am Anschlussgewinde 9 angeschlossene Rohrleitung einem jeweiligen Verbraucher zugeführt.

Damit der Schraubenkopf 14 der Schraube 12 bei der Montage mittels eines Gabelschlüssels 26 gut zugänglich ist, ist die Stirnseite 5 zusätzlich mit einer zur Ausnehmung 6 weniger tiefen Ausfräsung 27 versehen, so dass der Schraubenkopf 14, wie aus Fig. 2 ersichtlich, von zwei Seiten her zugänglich ist.

Damit beim Zusammenspannen die einzelnen Ventilkörper 2 mittels den Schrauben 12 diese sich nicht gegenseitig verdrehen, sind an den aneinanderliegenden Stirnflächen 5 weiter nicht dargestellte Stifte als Verdrehsicherung angeordnet.

Die beschriebene Ausbildung des Ventilkörpers 2 und der Schraube 12 ermöglicht das einfache Zusammensetzen mehrerer Steuerventile zu einer Ventil-Batterie, wobei der Ventilblock durch wenig erforderliche Bohrungen in seinen Abmessungen sehr klein gehalten werden kann.

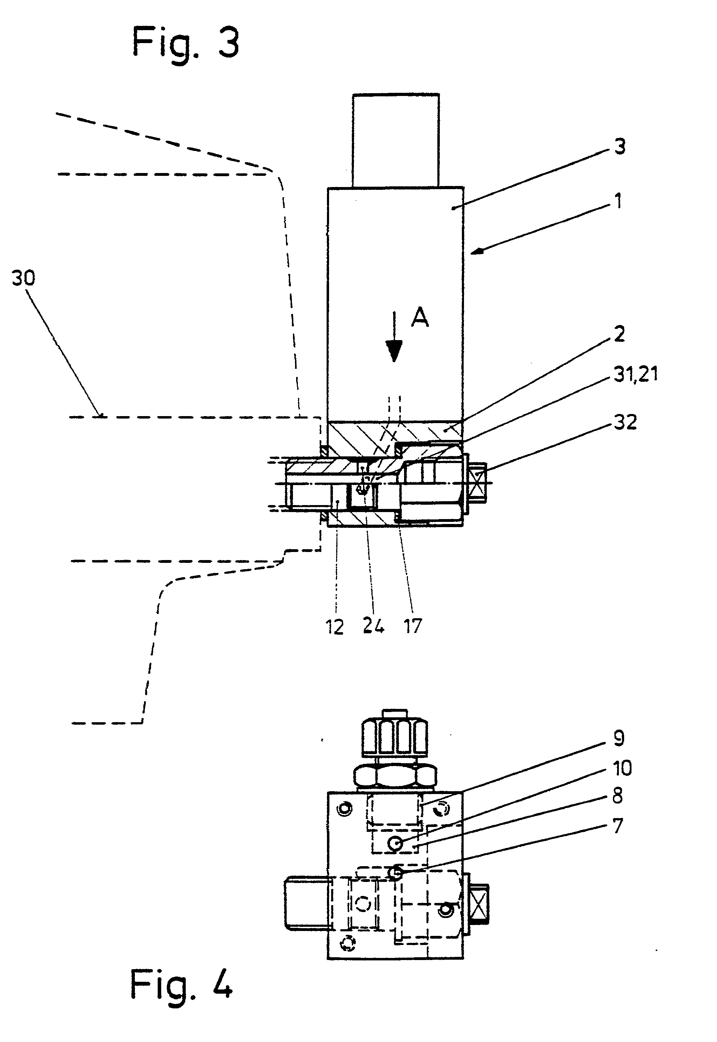

Gemäss den Fig. 3 und 4 kann ein Steuerventil 1 mit einem vorgängig beschriebenen Ventilkörper 2 direkt mittels der Schraube 12 an einem Verbraucher 30 - wie z. B. pneumatischer Stellantrieb eines Ventiles - befestigt werden. Die Schraube 12 weist hierbei ein Sackloch 31 auf, welches vorzugsweise durch Verschliessen der Durchgangsbohrung 21 mittels eines in das Innengewinde 15 eingeschraubten Stopfens 32 gebildet wird.

Dies ermöglicht die Verwendung der gleichen Schraube 12 und des gleichen Ventilkörpers 2.

Die Zuführung des Druckmediums erfolgt bei dieser Anwendung über das Anschlussgewinde 9, die Bohrung 8 und die Verbindungsbohrung 10 zum Steuer-Teil 3, wobei dann bei geöffnetem Ventil das Druckmedium durch die Verbindungsbohrung 7, die radiale Bohrung 24 und das Sackloch 31 zum Verbraucher gelangt. Eine direkte Befestigung des Steuerventils am Druckerzeuger mit der Schraube 12 ist ebenfalls möglich, wobei dann die Durchflussrichtung des Druckmediums umgekehrt ist. Das beschriebene Druckmittel-Steuerventil ist mit dem Ventilkörper 2 und der Schraube 12 vielseitig verwendbar und kann daher in entsprechender Stückzahl kostengünstig hergestellt werden.

**Patentansprüche**

1. Druckmittel-Steuerventil (1a, 1b) mit einem Steuer-Teil (3) und einem Ventilkörper (2), von dem mehrere zu einer Ventil-Batterie mittels Schrauben (12) verbindbar sind, wobei ein durchgehender Kanal (22) für das Druckmittel gebildet wird, dadurch gekennzeichnet, dass jede Schraube (12) ein Aussengewinde (13), ein entsprechendes Innengewinde (15) und eine Durchgangsbohrung (21) aufweist, wobei jede Schraube (12) mit ihrem Aussengewinde (13) in das Innengewinde (15) der nächstfolgenden Schraube (12) eingeschraubt und jeweils mit einer Bundfläche (16) gegen eine Stirnfläche (18) des Ventilkörpers (2) spannbar ist, wobei die Durchgangsbohrungen (21) in den Schrauben (12) den durchgehenden Kanal (22) bilden.

2. Steuerventil nach Anspruch 1, dadurch gekennzeichnet, dass die Schraube (12) am Aussenumfang eine Ringnute (23) aufweist, welche durch mindestens eine radiale Bohrung (24) mit der Durchgangsbohrung (21) verbunden ist und dass im Ventilkörper (2) im Bereich der Ringnute (23) eine Verbindungsbohrung (7) zum Steuer-Teil (3) angeordnet ist.

3. Steuerventil nach Anspruch 1 oder 2, dadurch gekennzeichnet, dass das Innengewinde (15) der im ersten Ventilkörper (2) angeordneten Schraube (12) den Zufuhranschluss (25) für das Druckmittel bildet und dass am über den letzten Ventilkörper (2) hinausragende Aussengewinde (13) der letzten Schraube (12) eine den durchgehenden Kanal (22) schliessende Hutmutter (19) angeordnet ist.

4. Steuerventil nach einem der Ansprüche 1 bis 3, dadurch gekennzeichnet, dass die Ventilkörper (2) zueinander mittels der Schraube (12) und eines Stiftes positioniert und gegen Verdrehen gesichert sind.

5. Steuerventil nach einem der Ansprüche 1 bis 4, dadurch gekennzeichnet, dass die Stirnseite (5) des Ventilkörpers eine an zwei Umfangseiten des Ventilkörpers (2) offene Ausfräsung (27) aufweist.

6. Verwendung eines Steuerventils (1) mit dem Steuer-Teil (3) und dem Ventilkörper (2) und der Schraube (12) gemäss einem der Ansprüche 1 bis 5 zur direkten Anordnung an einem Verbraucher (30), wobei das Innengewinde (15) der Schraube (12) mittels eines Stopfens (32) verschlossen ist, und das Außengewinde (13) der Schraube (12) in ein Innengewinde des Verbrauchers eingeschraubt ist.

**Claims**

1. Pressure actuated valve (1a, 1b) with a control section (3) and a valve body (2) from where several of them can be joined into a battery of fuel valves by means of screws 12, whereby a continuous channel (22) for the pressure medium is formed, characterised in that a screw (12) has an external thread (13), a corresponding internal thread (15) and a straightway channel (21), whereby each screw (12) with its external thread (13) can be screwed into the internal thread (15) of the next screw (12) and can in each case be clamped with a sealing face (16) against a face (18) of the valve body (2), whereby the straightway channel (21) in the screws (12) form the continuous channel (22).

2. Control valve as in claim 1, characterised in that the screw (12) has a ring slot (23) on the outer circumference, which is linked to the straightway channel (21) via at least one radial hole (24) and a connecting hole (7) to the control section (3) is located in the valve body (2) in the region of the ring slot.

3. Control valve as in claims 1 or 2, characterised in that the internal thread (15) of the screw (12) located in the first valve body (2) forms the feed joint (25) for the pressure medium and that the outer thread (13) of the last screw (12) extending beyond the last valve body (2) is fitted with a cap nut (19) closing off the continuous channel (22).

4. Control valve as in one of the claims 1 to 3 inclusive, characterised in that the valve bodies (2) are positioned up against each other by means of the screw (12) and a pin and are secured against twisting.

5. Control valve as in one of the claims 1 to 4 inclusive, characterised in that the face (5) of the valve body is made with an open recess (27) on two sides of the circumference of the valve body (2).

6. Use of a control valve (1) with the control section (3), valve body (2) and the screw (12) in accordance with one of the claims 1 to 5 inclusive for fitting directly onto a consuming unit (30), whereby the internal thread (15) of the screw (12) is sealed by a plug (32), and the outer thread (13) of the screw (12) is screwed into an inner thread of the consuming unit.

**Revendications**

1. Valve de commande ou pilote à fluide sous pression (1a, 1b) comprenant une partie de commande (3) et un corps de valve (2) dont plusieurs unités peuvent être regroupées en une batterie de valves au moyen de vis (12), un canal traversant (22) étant prévu pour le fluide sous pression, caractérisée en ce que chaque vis (12) comporte un filetage extérieur (13), un taraudage correspondant (15) et un alésage traversant (21), en ce que chaque vis (12) est vissée par son filetage extérieur (13) dans le taraudage (15) de la vis suivante (12) et est susceptible d'être respectivement serrée par une surface d'assemblage (16) contre une surface frontale (18) du corps de valve (2), les alésages traversants (21) dans les vis (12) constituant le canal traversant (22).

2. Valve de commande selon la revendication 1, caractérisée en ce que la vis (12) comporte à sa périphérie extérieure une rainure circulaire (23), qui est reliée par au moins un alésage radial (24) à l'alé- corps de valve (2), dans la région de la gorge circulaire (23), un alésage de liaison (7) avec la partie de commande (3).

3. Valve de commande selon la revendication 1 ou 2, caractérisée en ce que le taraudage (15) de la vis (12) disposée dans le premier corps de valve (2) constitue le raccord d'arrivée (25) du fluide sous pression et en ce qu'il est monté, sur le filetage extérieur (13) de la dernière vis (12) faisant saillie sur le dernier corps de valve (2), un écrou à calotte (19) obturant le canal traversant (22).

4. Valve de commande selon l'une des revendications 1 à 3, caractérisée en ce que les corps de valve (2), au moyen de la vis (12) et d'un téton, sont positionnés et bloqués en rotation les uns par rapport aux autres.

5. Valve de commande selon l'une des revendications 1 à 4, caractérisée en ce que la face frontale (5) du corps de valve présente, sur deux faces du pourtour du corps de valve (2), une fraisure ouverte (27).

6. Application d'une valve de commande (1) avec la partie de commande (3), le corps de valve (2) et la vis (12) selon l'une des revendications 1 à 5 par montage direct sur une utilisation (30), le taraudage (15) de la vis (12) étant obturé au moyen d'un bouchon (32) et le filetage extérieur (13) de la vis (12) étant vissé dans un taraudage de l'utilisation.

Fig. 2

Fig. 1

B

1a 3 11 7 5 15

1b

12 23 13

25

16 6 17 4 2 17 14 18 24 21 22 17

19

3 10 2 9 8

27 26

# Fig. 3

# Fig. 4